Europäisches Patentamt

European Patent Office

Office européen des brevets

(11) Veröffentlichungsnummer: **0 249 003**
**A1**

## EUROPÄISCHE PATENTANMELDUNG

(21) Anmeldenummer: **87105348.4**

(22) Anmeldetag: **10.04.87**

(51) Int. Cl.4: **B01D 53/06**

(30) Priorität: **30.05.86 DE 3618282**

(43) Veröffentlichungstag der Anmeldung:
**16.12.87 Patentblatt 87/51**

(84) Benannte Vertragsstaaten:
**AT CH DE ES FR GB IT LI NL SE**

(71) Anmelder: **IEG Industrie-Engineering GmbH**
**Lilienthalstrasse 6**
**D-7410 Reutlingen 11-Betzingen(DE)**

(72) Erfinder: **Bernhardt, Bruno**
**Goerdelerstrasse 2 W 113**
**D-7410 Reutlingen 11-Betzingen(DE)**

(74) Vertreter: **Möbus, Rudolf, Dipl.-Ing.**
**Hindenburgstrasse 65**
**D-7410 Reutlingen(DE)**

(54) **Aktivkohleeinrichtung zur Lösemittel-Rückgewinnung aus Luft.**

(57) Bei der Aktivkohleeinrichtung ist in einem Gehäuse ein umlaufendes, die Aktivkohle enthaltendes Filtergehäuse (15) angeordnet, das nacheinander eine Adsorbierzone (I), eine Regenerierzone (II) und eine Trocknungszone (III) durchläuft, so daß die Einrichtung im Dauereinsatz bleiben kann.

Fig. 2

EP 0 249 003 A1

## Aktivkohleeinrichtung zur Lösemittel-Rückgewinnung aus Luft

Die Erfindung betrifft eine Aktivkohleeinrichtung zur Lösemittel-Rückgewinnung aus Luft, mit einem Regenerier-und einem Nachtrocknungsteil und mit einem Gehäuse, das gesonderte Eingänge für die lösungsmittelhaltige Luft und für die Trocknungsluft sowie einen Ausgang für die gereinigte Luft aufweist.

Aktivkohleeinrichtungen müssen von Zeit zu Zeit regeneriert werden, wenn die Aktivkohle mit Lösemittel gesättigt ist. Um während dieser Zeit die Lösemittel-Rückgewinnung nicht unterbrechen zu müssen, ist es bekannt, Zwillingsfilteranlagen zu verwenden, also zwei Aktivkohleeinrichtungen, von denen immer eine als Filter eingesetzt ist, während die andere regeneriert wird. Solche Zwillingsfilteranlagen machen einen großen technischen Aufwand mit Umschaltkanälen und dergleichen erforderlich und sind dementsprechend teuer.

Der Erfindung liegt die Aufgabe zugrunde, eine Aktivkohleeinrichtung der eingangs genannten Art so auszubilden, daß mit ihr eine kontinuierliche Lösemittel-Rückgewinnung ohne den Einsatz einer Zwillingeinrichtung möglich ist.

Die gestellte Aufgabe wird mit einer Aktivkohleeinrichtung der eingangs genannten Art erfindungsgemäß dadurch gelöst, daß die Aktivkohle in dem Gehäuse in einem Rotationskörper angeordnet ist, der auf beiden Stirnseiten gasdurchlässig ist und der relativbeweglich zu einem Regenerierteil und zu einem Nachtrocknungsteil, deren Wirkungsbereich sich jeweils nur über einen Teil des Gehäuses erstreckt, so angeordnet ist, daß in jeder Relativstellung immer ein erster Teil des Rotationskörpers der zu reinigenden Luft, ein zweiter Teil einem Regeneriergas und ein dritter Teil Trocknungsluft ausgesetzt ist.

Vorteilhafterweise kann dabei die Aktivkohle in einem hohlzylindrischen, ungeteilten oder in mehrere Sektoren unterteilten und an seinen Stirnseiten gasdurchlässigen, in dem Gehäuse der Einrichtung drehbar gelagerten Filtergehäuse angeordnet sein, dessen beiden Stirnseiten jeweils eine Dampfzufuhr-oder Dampfableitungsöffnung und eine Trocknungsluftzufuhr-oder -ableitungsöffnung zugeordnet sind, die sich jeweils nur über einen Teil bzw. über mindestens einen Sektor des Speicherkörpers erstrecken und mindestens einseitig von Neutralbereichen flankiert sind, während sich der Eintrittsbereich für die lösungsmittelhaltige Luft oder der Austrittsbereich der gereinigten Luft über den übrigen Stirnseitenbereich des Filtergehäuses erstreckt. Anstelle der Filtersektoren können in einer Trägerscheibe auch einzelne Filterpatronen angeordnet sein.

Eine Aktivkohleeinrichtung gemäß der Erfindung erlaubt also einen kontinuierlichen Betrieb ohne Abschaltung zwecks Regeneration der Aktivkohlefüllung. Das mit Aktivkohle gefüllte Filtergehäuse durchläuft in regelmäßigen oder unregelmäßigen, dem Sättigungsgrad der Kohle angepaßten Zeitabständen einen Regenerierteil, in welchem das ausgefilterte Lösungsmittel zurückgewonnen und die Aktivkohle reaktiviert wird, und anschließend auch einen für die volle Reaktivierung der Aktivkohle wichtigen Nachtrocknungsteil, während der übrige und größere Teil der Aktivkohleeinrichtung als Filterkammern aktiv ist. Wegen gleichbleibender Druckverhältnisse und der die Prozeßbereiche voneinander trennenden Neutralzonen erübrigen sich besondere Maßnahmen zur Abdichtung. Bei der Verwendung von Filterpatronen läßt sich in den Regenerierstationen und beim Nachtrocknen Dampf bzw. Luft über dicht aufsetzbare Kappen ein-und ausleiten, und eine Trägerscheibe für die Filterpatronen läßt sich mittels eines aufblasbaren Schlauches zu einer dichten Zwischenwandung verwandeln. Außerdem läßt sich die Einrichtung mit einem geringeren Aufwand an teuren korrosionsbeständigen Werkstoffen herstellen, da nur Teile der Anlage im Regenerationsteil aggressiven Dämpfen ausgesetzt sein können.

Vorteilhafterweise wird im Regenerierteil der Dampf von oben nach unten durch die mit Aktivkohle gefüllten Einrichtungsteile geleitet. Es kann somit kein verunreinigtes Kondenswasser in den Dampferzeuger zurücklaufen. Abgespaltener Kohleschlamm wird ausgespült. Die Dampfdurchlaufgeschwindigkeit läßt sich durch passende Bemessung der Kammern und Leitungen so hoch halten, daß Dampf und Kondenswasser ohne Pumpe in einen höher gelegenen Wasserabschei der gefördert werden. Auch im Nachtrocknungsteil kann die Luft zweckmäßig von oben nach unten durch die Aktivkohlekammern hindurchgeleitet werden.

Nachfolgend werden zwei Ausführungsbeispiele einer erfindungsgemäß ausgebildeten Aktivkohleeinrichtung anhand der beiliegenden Zeichnung näher erläutert.

Im einzelnen zeigen:

Fig. 1 einen schematischen zentralen Längsschnitt durch ein erstes Ausführungsbeispiel der Einrichtung entlang der Linie I - I in Fig. 2;

Fig. 2 einen schematischen Querschnitt durch die Einrichtung entlang der Linie II - II in Fig. 1;

Fig. 3 einen schematischen zentralen Längsschnitt durch die Einrichtung entlang der Linie III - III in Fig. 2;

Fig. 4 einen schematischen, der Fig. 2 entsprechenden Querschnitt durch eine Einrichtung mit in Sektoren gegliedertem Filtergehäuse;

Fig. 5 einen schematischen zentralen Teillängsschnitt durch ein zweites Ausführungsbeispiel der Einrichtung;

Fig. 6 einen Teillängsschnitt im Nachtrocknungsbereich der Einrichtung nach Fig. 4.

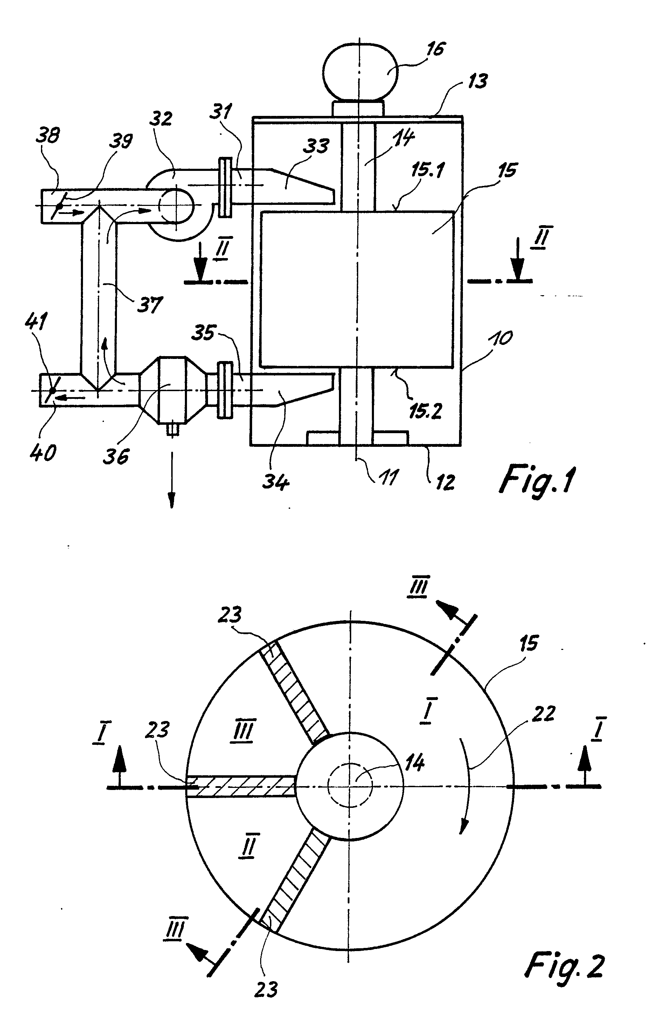

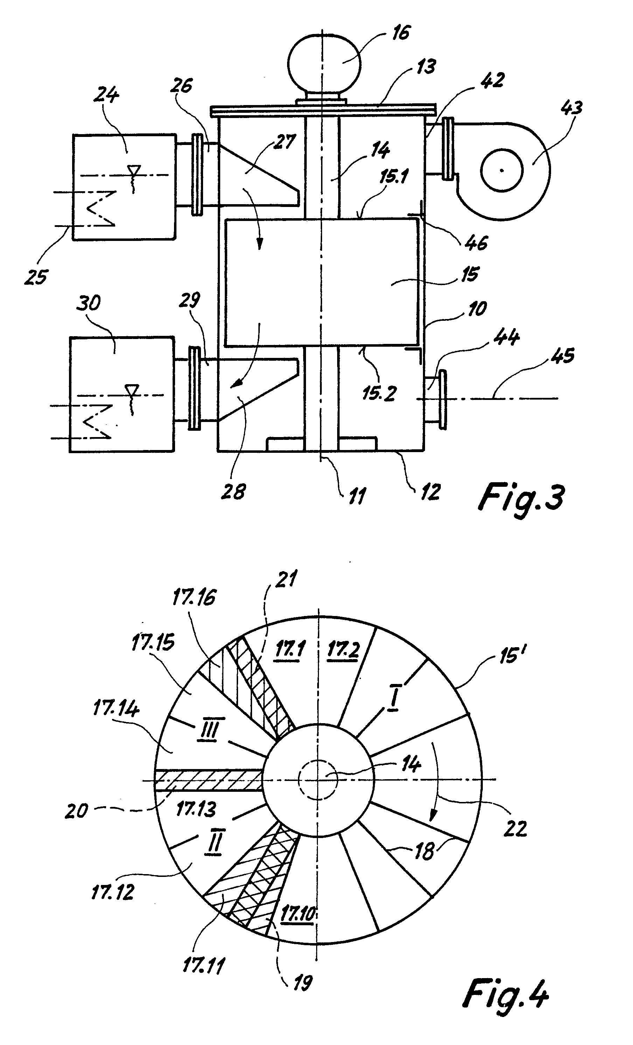

Die in der Zeichnung dargestellte Aktivkohleeinrichtung weist ein kreiszylindrisches, mit vertikaler Achse 11 angeordnetes Gehäuse 10 auf, in welchem konzentrisch in der Bodenstirnseite 12 und in einem oberen stirnseitigen Deckel 13 eine Welle 14 gelagert ist, die in zentraler Anordnung ein Filtergehäuse 15 trägt. Die Welle 14 wird durch einen auf den Deckel 13 aufgesetzten Motor 16 kontinuierlich oder in Abhängigkeit vom Sättigungsgrad der im Filtergehäuse 15 enthaltenen Aktivkohle zeitgesteuert angetrieben. Die Drehrichtung des Filtergehäuses ist in den Fig. 2 und 4 durch einen Richtungspfeil 22 angegeben.

Die beiden Stirnseiten 15.1 und 15.2 des zylindrischen Speicherkörpers 15 sind durch gasdurchlässige Siebwandungen gebildet. Bei einer Unterbringung der Aktivkohle in an den Wandungen des Filtergehäuses 15 verankerbaren Säcken können die Stirnseiten 15.1 und 15.2 des Filtergehäuses 15 auch ganz offen sein.

Wie aus der Querschnittsdarstellung der Fig. 2 ersichtlich ist, sind die beiden Stirnseiten 15.1 und 15.2 des Filtergehäuses 15 durch radial verlaufende Neutralbereiche 23 in drei Zonen aufgeteilt, nämlich in eine Adsorbierzone I, eine Desorbierzone oder Regenerierzone II und eine anschließende Kühl-und Trocknungszone III für die Aktivkohle.

Jeder Teil des Filtergehäuses durchläuft nacheinander die Adsorbierzone I, die Regenerierzone II und die Kühl-und Trocknungszone III der Aktivkohleeinrichtung. Es ist eine kontinuierliche langsame Drehbewegung der Welle 14 und des Filtergehäuses 15 vorgesehen.

Der aus Fig. 3 ersichtliche Regenerierteil der Einrichtung weist einen außerhalb des Gehäuses 10 angeordneten Dampferzeuger 24 auf, in welchem Wasser mittels einer elektrischen Heizeinrichtung 25 verdampft wird. Der Dampf wird über einen seitlichen Anschlußstutzen 26 des Gehäuses 10 und einen im Innern des Gehäuses 10 angeordneten Dampfzuführungstrichter 27 in den zwischen den aus Fig. 2 ersichtlichen, durch Deckwandungen gebildeten Neutralbereichen 23 liegenden Umfangsbereich des Filtergehäuses 15 geleitet. Dort ist der Spalt zwischen dem Filtergehäuse 15 und der Wandung des Gehäuses 10 durch eine flexible Dichtung 46 verschlossen. Auf der gegenüberliegenden Stirnwandung 15.2 des Filtergehäuses 15 befindet sich an der gleichen Stelle ein Dampfabzugstrichter 28, der mit einem Anschlußstutzen 29 des Gehäuses 10 verbunden ist, an welchen ein außerhalb des Gehäuses 10 angeordneter Kondensator 30 angeschlossen ist. Im Kondensator 30 werden die durch den Dampf aus der Aktivkohle ausgetriebenen Lösungsmittel zusammen mit dem Dampf kondensiert und in üblicher Weise mittels eines Wasserabscheiders vom Wasser getrennt, das im Kreislauf in den Dampferzeuger 24 zurückgefördert wird.

Der aus Fig. 1 ersichtliche Trocknungsteil der Einrichtung, der in Umlaufrichtung des Filtergehäuses 15 auf den Regenerierteil folgt, bewirkt eine Trocknung der vorher mit Dampf behandelten Aktivkohlefüllung. Über einen seitlichen Anschlußstutzen 31 wird mittels eines Ventilators 32 Trocknungsluft über einen innerhalb des Gehäuses 10 angeordneten Eingabetrichter 33 in den zu trocknenden Bereich eingeleitet und auf der gegenüberliegenden unteren Seite über einen Abzugstrichter 34 und über einen äußeren Anschlußstutzen 35 wieder nach außen zu einem Luftkühler 36 geleitet. Der Trocknungsteil kann als Umluftsystem arbeiten, wobei der Luftkühler 36 über eine Verbindungsleitung 37 mit der Saugseite des Ventilators 32 verbunden ist. Der Trocknungsteil kann aber auch mit einem offenen Luftkreislauf arbeiten, wobei über einen Ansaugstutzen 38, dessen Einlaß durch eine Luftklappe 39 gesteuert ist, vom Ventilator 32 Frischluft angesaugt wird und die aus dem Luftkühler 36 ausströmende Luft über einen Auslaßstutzen 40, der ebenfalls mit einer Luftklappe 41 versehen ist, wieder ins Freie abgegeben wird.

Dem in Fig. 2 eingezeichneten Adsorbierbereich I wird die zu reinigende, lösungsmittelhaltige Luft über einen im Deckel 13 oder im Gehäusemantel 10 angeordneten Einlaßstutzen 42 mittels eines aus Fig. 3 ersichtlichen Ventilators 43 zugeführt. Auf der Unterseite des Gehäuses 10 wird die gereinigte Luft über einen Anschlußstutzen 44 in Richtung des eingetragenen Pfeiles 45 abgeleitet.

Fig. 4 zeigt ein Filtergehäuse 15', das regelmäßig in einzelne Sektoren 17 unterteilt ist, hier in sechzehn Sektoren 17.1 - 17.16. Die einzelnen Sektoren 17.1 - 17.16 sind durch Radialwände 18 voneinander getrennt. Die Neutralbereiche werden hier durch stirnseitige Deckwandungen 19, 20, 21 gebildet, die sich über einen ganzen Sektor des Filtergehäuses erstrecken können. Bei in der aus Fig. 4 ersichtlichen Umfangsstellung des Filtergehäuses 15' werden von der oberen und der unteren Deckwandung 19 der Speichersektor 17.11, von der oberen und unteren Deckwandung 21 der Speichersektor 17.16 und von der unteren und oberen Deckwandung 20 teilweise der Speichersektor 17.13 und teilweise der Speichersektor 17.14 abgedeckt. Auch hier werden die sich über jeweils zwei Sektoren erstreckende Regenerierzone II und Trocknungszone III von allen Sektoren 17.1 - 17.16 des Filtergehäuses 15' nacheinander durchlaufen. Dabei erfolgt durch einen Schrittschaltmotor 16 zweckmäßig eine Weiterbewegung des Filtergehäuses 15' in Einzelschritten, die jeweils der Umfangsbreite eines Speichersektors 17 entsprechen.

In den einzelnen Sektoren 17 kann die Aktivkohle in vom Mantel des Filtergehäuses 15' her einsetzbaren auswechselbaren Kassetten untergebracht sein, die ein Auswechseln der Aktivkohlefüllung erleichtern.

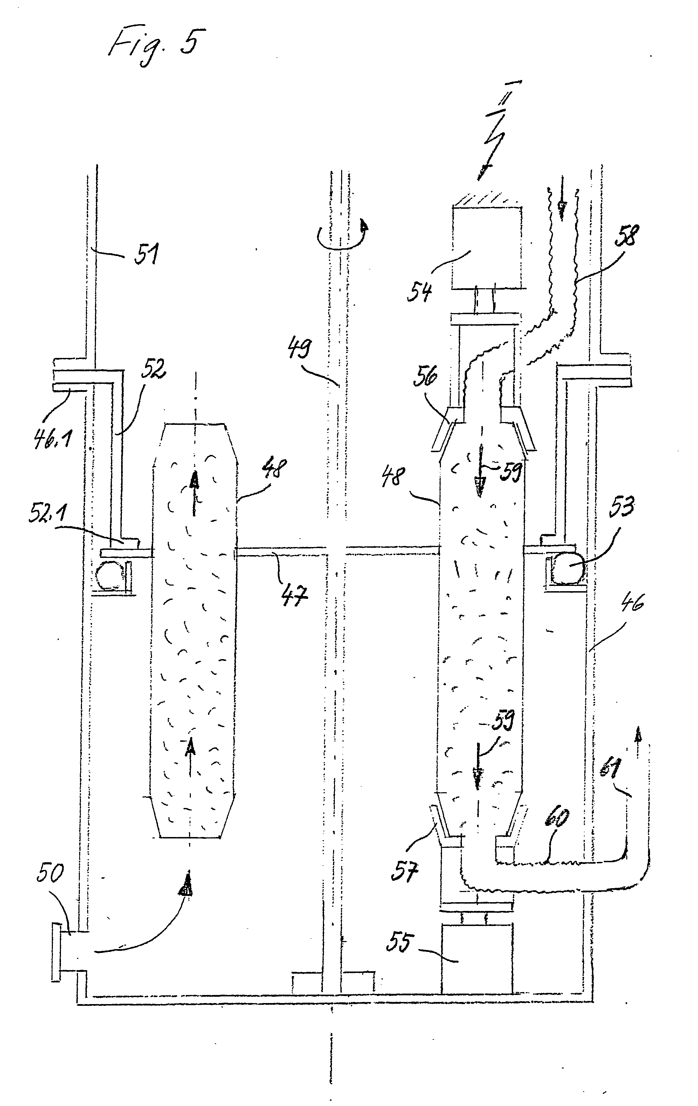

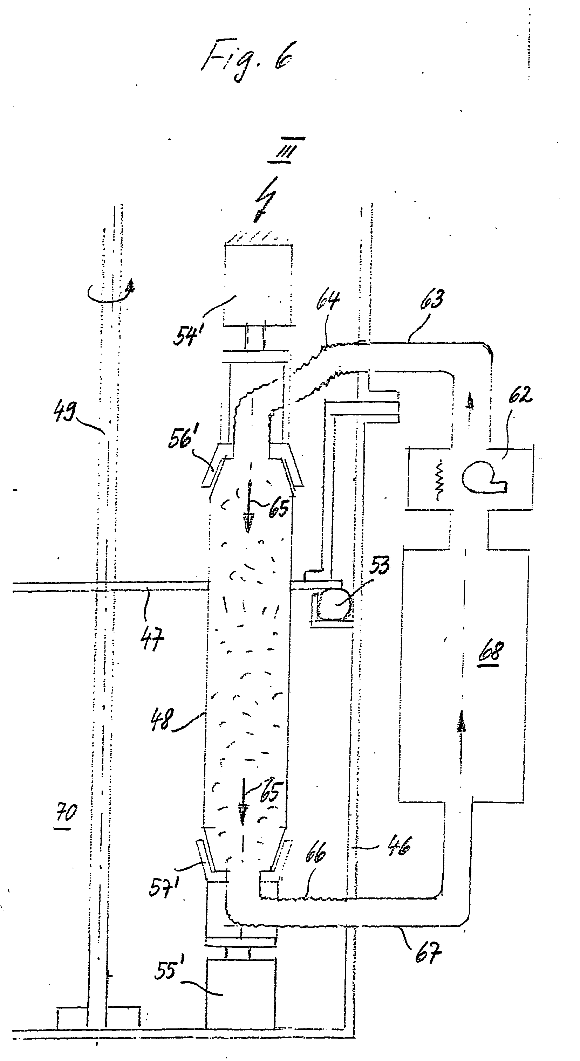

Die Fig. 5 und 6 zeigen ein topfförmiges Filtergehäuse 46 aus hochwertigem widerstandsfähigem Kunststoffmaterial, in welchem in einer Trägerscheibe 47 auf einem Mittelpunktskreis in gleichmäßigen Abständen mit Aktivkohle gefüllte Patronen 48 angeordnet sind. Die Trägerscheibe 47 ist auf einer von einem nicht dargestellten Schrittschaltmotor antreibbaren Vertikalwelle 49 befestigt. Die Patronen 48 sind an beiden Enden, die konisch verjüngt sind, offen. Die zu reinigende Luft wird über einen im Bodenbereich des Filtergehäuses 46 angeordneten Einlaßstutzen 50 eingeleitet und strömt durch die Filterpatronen 48 nach oben in den Bereich eines auf das topfförmige Filtergehäuse 46 aufgesetzten Deckels 51 und tritt von dort aus ins Freie. Zwischen den Deckel 51 und den Flanschrand 46.1 des Filtergehäuses 46 ist ein an beiden Enden mit Flanschen versehener Anschlagring 52 eingesetzt. Gegen den inneren Flansch 52.1 dieses Anschlagringes 52 wird die Trägerscheibe 47 mittels eines an der Innenwandung des Behälters 46 gelagerten, aufblasbaren Schlauches 53 angedrückt, wodurch die Trägerscheibe 47 fixiert und ihr Randbereich abgedichtet wird. Vor dem Weiterdrehen der Trägerscheibe 47 wir der Schlauch 53 entlüftet.

Innerhalb des Filtergehäuses 46 ist mindestens eine Regenerierposition und eine Kühl-und Trocknungsposition ausgebildet. Fig. 5 zeigt die Regenerierposition II, wo über Kolben/Zylinder-Anordnungen 54 und 55 Anschlußkappen 56 und 57 auf das offene obere Ende und das offene untere Ende der in die Regenerierposition gebrachten Filterpatrone 48 aufgesetzt werden. Durch die obere Anschlußkappe 56 wird über einen flexiblen Schlauch 58 von einem nicht dargestellten Dampferzeuger her Dampf eingeleitet, der die Filterpatrone 48 in Richtung der eingetragenen Pfeile 59 von oben nach unten durchströmt und durch die untere Verschlußkappe 57 über eine flexible Leitung 60 nach außen in eine Ableitung 61 geleitet wird, die zu einem nicht dargestellten Kondensator führt.

In Fig. 6 ist die Kühl-und Trockungsposition III des Filtergehäuses 46 dargestellt, in welcher wie in der Regenerierposition II Anschlußkappen 56' und 57' mittels Kolben/Zylinder-Anordnungen 54' und 55' auf die dort befindliche Filterpatrone 48 aufgesetzt sind. Mittels eines außerhalb des Filtergehäuses 46 angeordneten Ventilators 62, der mit einer Lufterwärmungseinrichtung gekoppelt sein kann, wird über eine Anschlußleitung 63 und eine flexible Schlauchleitung 64 Trockungsluft im Kreislauf in Richtung der Pfeile 65 von oben nach unten durch die Filterpatrone 48 geleitet, die über eine flexible Schlauchleitung 66 und eine äußere Verbindungsrohrleitung 67 in einen Kühler 68 und von dort weiter zur Ansaugseite des Ventilators 62 geführt wird. Anstelle dieses geschlossenen Trocknungsluft-Kreislaufes könnte auch ein offener Kreislauf vorgesehen sein, in dem die untere Abdeckkappe 57' entfernt wird, so daß die Trocknungsluft in den Innenraum 70 des Filtergehäuses 46 austritt und über die in der Adsorbierzone befindlichen Filterpatrone 48 zusammen mit der verunreinigten Luft in den Deckelbereich abgeleitet wird. Dies hat den Vorteil, daß die aus der Filterpatrone 48 entnommene Wärme im Filtergehäuse verbleibt. Die Filterpatronen 48 und auch die Anschlußköpfe 55 und 56 können aus korrosionsbeständigem Kunststoff gefertigt sein.

## Ansprüche

1. Aktivkohleeinrichtung zur Lösemittel-Rückgewinnung aus Luft, mit einem Regenerier- und einem Nachtrocknungsteil und mit einem Gehäuse, das gesonderte Eingänge für die lösungsmittelhaltige Luft und für die Trocknungsluft und einen Ausgang für die Reinigungsluft aufweist, dadurch gekennzeichnet, daß die Aktivkohle in dem Gehäuse (10) in einem Rotationskörper (15, 47) angeordnet ist, der an beiden Stirnseiten gasdurchlässig ist und der relativbeweglich zu einem Regenerierteil (24 - 30; II) und zu einem Nachtrocknungsteil (31 - 35; III), deren Wirkungsbereich sich jeweils nur über einen Teil des Gehäuses erstreckt, so angeordnet ist, daß in jeder Relativstellung immer ein erster Teil des Rotationskörpers der zu reinigenden Luft, ein zweiter Teile einem Regeneriergas und ein dritter Teil Trocknungsluft ausgesetzt ist.

2. Aktivkohleeinrichtung nach Anspruch 1, dadurch gekennzeichnet, daß die Aktivkohle in einem hohlzylindrischen, in dem Gehäuse (10) der Einrichtung drehbar gelagerten Filtergehäuse (15, 15') angeordnet ist, dessen beiden Stirnseiten (15.1, 15.2) jeweils ein Dampfzuführbereich (Trichter 27) oder Dampfableitungsbereich (Trichter 28) und ein Trocknungsluftzuführbereich (Trichter

33) oder ein Trocknungsluft-Ableitungsbereich (Trichter 34) zugeordnet sind, die sich jeweils nur über einen Sektor (II, III) des Filtergehäuses (15) erstrecken und mindestens einseitig von Neutralbereichen (23; Deckwandungen 19, 21) flankiert sind, während sich der Eintrittsbereich für die lösungsmittelhaltige Luft oder der Austrittsbereich der gereinigten Luft über den übrigen Stirnseitenbereich (I) des Filtergehäuses (15) erstreckt.

3. Aktivkohleeinrichtung nach Anspruch 1 und 2, dadurch gekennzeichnet, daß das Filtergehäuse (15) konzentrisch in einem zylindrischen Langgehäuse (10) der Einrichtung auf einer in den Stirnwandungen (12, 13) des Langgehäuses (10) gelagerten Welle (14) angeordnet ist, daß ein Ventilator (43) zum Einbringen der lösungsmittelhaltigen Luft und der Ausgang (44) für die gereinigte Luft in Achsrichtung gesehen auf verschiedenen Seiten des Filtergehäuses (15) angeordnet sind, daß ein Antriebsmotor (16) für die Welle (14) auf einem Deckel (13) des Langgehäuses (10) angeordnet ist und daß sich die Ein-und Austrittsöffnungen (26, 29; 31, 35) für den Regenerierdampf und für die Trocknungsluft auf der Mantelseite des Langgehäuses (10) befinden.

4. Aktivkohleeinrichtung nach einem der Ansprüche 1 bis 3, dadurch gekennzeichnet, daß sie in bekannter Weise einen geschlossenen, mittels einer Umwälzpumpe betriebenen Regenerierkreislauf aufweist, wobei die Dampfeinlaßöffnung (26) des Gehäuses mit einem Dampferzeuger (24) und die Dampfauslaßöffnung (29) des Gehäuses (10) mit einem Kondensator und Wasserabscheider (30) verbunden sind.

5. Aktivkohleeinrichtung nach einem der Ansprüche 1 bis 4, dadurch gekennzeichnet, daß das zylindrische Filtergehäuse (15') in mehrere gleiche Sektoren (17.1 -17.16) unterteilt ist, daß sich der Regenerierteil und der Nachtrocknungsteil jeweils über mindestens einen Sektor und die Neutralbereiche mit Deckwandungen (19, 20, 21) sich ebenfalls über mindestens einen Sektor des Filtergehäuses (15') erstrecken.

6. Aktivkohleeinrichtung nach Anspruch 5, dadurch gekennzeichnet, daß in den einzelnen Sektoren (17) die Aktivkohle in auswechselbaren, von der Mantelseite des Filtergehäuses (15') her einsetzbaren Kassetten untergebracht ist.

7. Aktivkohleeinrichtung nach einem der Ansprüche 1 bis 4, dadurch gekennzeichnet, daß der Rotationskörper aus einer Trägerscheibe (47) mit mehreren, über ihren Umfang gleichmäßig verteilten, oben und unten offenen Filterpatronen (48) besteht, und im Filtergehäuse (46) mindestens eine Regenerierstation (II) und mindestens eine Kühl- und Trocknungsstation (III) ausgebildet sind, in welchen mindestens eine Öffnung der Filterpatronen (48) mit einer Kappe (56, 57; 56', 57') zum Einbringen oder Ausbringen von Dampf oder Trocknungsluft versehbar sind.

8. Aktivkohleeinrichtung nach Anspruch 7, dadurch gekennzeichnet, daß die Kappen (56, 57; 56', 57') mittels Kolben/Zylinder-Anordnungen (54, 55; 54', 55') abheb-und ansetzbar sind.

9. Aktivkohleeinrichtung nach Anspruch 7, dadurch gekennzeichnet, daß die Trägerscheibe (47) während des Betriebs eine Trennwandung im Gehäuse (46) bildet, deren Randbereich mittels eines aufblasbaren Schlauches (53) abdichtbar ist.

10. Aktivkohleeinrichtung nach einem der Ansprüche 1 bis 9, dadurch gekennzeichnet, daß im Regenerierbereich (II) und/oder im Kühl-und Trocknungsbereich (III) der Dampf bzw. die Trocknungsluft von oben nach unten durch die Filtergehäusesektoren (17) oder Filterpatronen (48) hindurchgeleitet wird.

Fig.1

Fig.2

**Fig.3**

**Fig.4**

# Fig. 5

Fig. 6

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 409 006  (M.M. MATTIA)<br><br>* Spalte 2, Zeile 47 - Spalte 6, Zeile 20; Figuren 1-5 *<br><br>--- | 1-3,6, 10 | B 01 D   53/06 |
| X | US-A-3 183 649  (A.J. TELLER)<br><br>* Insgesamt *<br><br>--- | 1,2,4, 9 | |
| A | FR-A-1 520 805  (M.R.W. GRÄFF)<br>* Seiten 3-5; Figuren 2,8,9 *<br><br>--- | 1,4,7 | |
| A | DE-A-2 460 401  (DEUTSCHE BABCOCK & WILCOX AG)<br><br>----- | | |
| | | | **RECHERCHIERTE SACHGEBIETE (Int. Cl.4)**<br><br>B 01 D   53/00 |

Der vorliegende Recherchenbericht wurde für alle Patentansprüche erstellt.

| Recherchenort | Abschlußdatum der Recherche | Prüfer |
|---|---|---|
| DEN HAAG | 22-09-1987 | POLESAK, H.F. |